# EUROPÄISCHE PATENTANMELDUNG

(11) **EP 3 557 090 A1**
(43) Veröffentlichungstag der Anmeldung: **23.10.2019**
(21) Anmeldenummer: 18167668.5
(22) Anmeldetag: 17.04.2018
(51) Int. Cl.: F16D 55/226

(54) **BREMSSATTELEINHEIT**

(71) Anmelder: Kochsiek, Adolf, 33818 Leopoldshöhe (DE)
(72) Erfinder: Kochsiek, Adolf, 33818 Leopoldshöhe (DE)
(74) Vertreter: Rausch Wanischeck-Bergmann Brinkmann

(57) **Zusammenfassung**

Die Erfindung betrifft eine Bremssattel-Einheit (1) für Scheibenbremsen, mit einem einen Sattel bildenden Träger (2), einer pneumatisch betriebenen Kolben-/Zylinderanordnung und einem Bremsbelag wobei ein Kolben und ein Zylinder einen nicht kreisrunden Querschnitt aufweisen und als Tandem-Kolben-Baugruppe ausgebildet sind.

## Beschreibung

Die vorliegende Erfindung betrifft eine Bremssatteleinheit für Scheibenbremsen.

Scheibenbremssysteme sind hinlänglich im Stand der Technik bekannt und werden in großem Umfang eingesetzt. Es handelt sich um auf Achsen und Wellen montierte drehende Scheiben, welche einen Schlitz in einer Bremssatteleinheit durchlaufen. In der Bremssatteleinheit sind von einem Druckmedium betätigbare Kolben angeordnet, welche bei Druckerhöhung Druck auf einen Bremsbelag ausüben, der in der Regel plattenförmig zwischen Kolben und Scheibe positioniert ist. Durch den vortreibenden Kolben wird Bremsbelag gegen die Scheibe gedrückt und diese somit abgebremst. Es sind Systeme bekannt, bei welchem der Druck einseitig ausgeübt wird, so dass ein Bremsbelag gegenüber einer Bremsscheibe parallel zu ihrer Reibfläche verschiebbar schwimmend angeordnet ist. Beidseitig der Scheibe positionierte Bremsbeläge werden somit auf die Bremsscheibe geführt. Auch bekannt sind zweiseitig betriebene Bremssatteleinheiten, bei welchen Druck auf beiden Seiten der Bremsscheibe auf Kolben gegeben wird, so dass beidseitig Bremsbeläge vorgetrieben werden.

Zunehmend wird versucht, pneumatische Bremssysteme zu entwickeln, die den mechanischen Anforderungen genügen können. Hauptgrund hierfür ist die Tatsache, dass die in den hydraulischen Bremssystemen verwendeten Bremsflüssigkeiten hygroskopisch sind, also durch Wasseraufnahme altern und ihre Kompressionslosigkeitseigenschaften dadurch erheblich abgeschwächt werden. Diese Bremsflüssigkeiten müssen häufig ausgetauscht werden, was insgesamt eine hohe Umweltbelastung und eine hohe Kostenbelastung für Betreiber bewirkt.

Pneumatische Bremssysteme bringen das Problem der notwendigen Druckbeaufschlagung mit sich. Herkömmliche Bremskolben sind rundzylindrische Einheiten, die auf plattenförmige Bremsbelageinheiten Druck ausüben. Die für pneumatischen Druck zur Verfügung stehende Kolbenfläche ist in Bezug auf den Kraftbedarf gering, so dass hier der pneumatische Druck extrem hoch eingestellt sein muss. Dies führt zu hohen Betriebskosten und zu hohen Auslegungskosten für das pneumatische System, Leitungen, Dichtungen und dergleichen.

Pneumatische Drücke können im Allgemeinen nicht so hoch wie hydraulische sein, weil sich die Luft stärker komprimieren lässt. Die Erzeugung von hohen pneumatischen Drücken ist unwirtschaftlich.

Ausgehend vom vorbeschriebenen Stand der Technik liegt der Erfindung die **Aufgabe** zugrunde, eine Bremssatteleinheit der gattungsgemäßen Art dahingehend weiterzubilden, dass diese für den Einsatz in pneumatischen Bremssystemen geeignet ist.

Zur technischen **Lösung** dieser Aufgabe wird eine Bremssatteleinheit mit den Merkmalen des Patentanspruches 1 vorgeschlagen. Weitere Vorteile und Merkmale ergeben sich aus den Unteransprüchen.

Erfindungsgemäß ist vorgesehen, dass Kolben und Zylinder einer Kolbenzylinderanordnung einen unrunden Querschnitt aufweisen, das heißt, sie sind nicht kreisrund, sondern können eine nicht kreisrunde Querschnittsform aufweisen. Gemäß einem vorteilhaften Vorschlag der Erfindung wird eine elliptische Form vorgeschlagen. Aber auch eine Vieleckform, ein Polygon oder eine Zykloide sind grundsätzlich geeignet. Hierdurch wird die Möglichkeit geschaffen, die Kolbenfläche, die mit Druckmedium beaufschlagt wird, entsprechend groß auszubilden.

Weiterhin wird erfindungsgemäß vorgeschlagen, dass die Kolben-Zylinderanordnung als Tandemkolbenbaugruppe ausgebildet ist. Unter Tandemkolben versteht man in der Fachwelt, zumindest im Sinne der vorliegenden Erfindung eine Anordnung, wo hintereinander geschaltete Kolbeneinheiten mit Druck beaufschlagt werden, wobei der Druck auf einen der Kolben den Druck auf den nachfolgenden Kolben entsprechend erhöht. Ähnlich bekannten Tandemzylindern sind zwei einzelne Druckkolben hintereinander angebracht. Ein Primärkolben wird vom Stößel betätigt, zugleich aber druckbeaufschlagt. Zusätzlich wird der den Stößel bewegende Kolben ebenfalls mit Druck beaufschlagt. Die Bezeichnung "Tandembremszylinder" wird im Sinne der vorliegenden Erfindung analog verwendet, es handelt sich dem Grunde nach um eine Serienschaltung von Druckkolbeneinheiten, mit dem Ergebnis, dass der resultierende Druck entsprechend erhöht ist. Diese Erhöhung kann bis über 75% hinausgehen.

Durch die erfindungsgemäßen Maßnahmen der Vergrößerung der wirksamen Kolbenfläche und der Tandemauslegung wird ausreichend Druck durch ein pneumatisches System erzeugt, um eine ausreichende Kraft auf die Bremsbeläge ausüben zu können.

Der erforderliche Bauraum und damit auch das Gesamtgewicht werden im Vergleich zu bestehenden Systemen nicht vergrößert.

Gemäß der Erfindung sind wenigstens zwei Kolben-/Zylinderanordnungen nebeneinanderliegend angeordnet. Es kann sich auch um die parallele Anordnung mehrerer Kolben-/Zylinderanordnungen handeln, um die Reibfläche durch eine entsprechende Anzahl von Bremsbelägen erhöhen zu können.

In erfindungsgemäßer Weise sind die Bremskolben zur schwimmenden Anordnung an einer Radbaugruppe ausgebildet. Das bedeutet, dass der Bremskolben sich parallel zur Reibfläche der Bremsscheibe relativ zu dieser bewegen kann. Auf diese Weise findet immer eine automatische Zentrierung der Bremsscheibe im Bremssattelschlitz statt.

In erfindungsgemäßer Weise kann der Träger eine Aufnahmekammer für die Kolben-/ Zylinderanordnung aufweisen. Die Kolben-/Zylinderanordnung weist einen topfförmigen Kolben auf, der einen unrunden Querschnitt hat und dem Vortrieb des Bremsbelages dient.

In einer erfindungsgemäßen Ausgestaltung wird die Tandemausbildung durch zwei ineinander geführte topfförmige Kolbeneinheiten gebildet, wobei die innere Kolbeneinheit einen Zylinderraum für einen Kolben bildet und von der mit dem Kolben verbundenen Kolbenstange durchragt wird. Diese Kolbenstange wiederum ist mit dem äußeren topfförmigen Kolben verbunden, der den inneren topfförmigen Kolben in seinem Inneren aufnimmt. Die äußere topfförmige Kolbeneinheit bildet somit einen Zylinderraum für die innere topfförmige Einheit, die somit einen weiteren Kolben bildet.

Mit der Erfindung werden äußert wirksame Merkmale für eine Bremssatteleinheit vorgeschlagen, welche geeignet ist, den Aufbau eines ausreichenden Druckes bei Betrieb mit pneumatischem Druckmedium, das heißt Druckluft, durchzuführen.

Weitere Vorteile und Merkmale der Erfindung ergeben sich aus der folgenden Beschreibung anhand der Figuren. Dabei zeigen:
- Fig. 1: eine Seitenansicht einer Ausführungsform einer erfindungsgemäßen Bremssatteleinheit;
- Fig. 2: einen Schnitt entlang der Linie A-A gemäß Fig. 1K;
- Fig. 3: eine teilgeschnittene Draufsicht auf Bremssatteleinheit gemäß Fig. 1;
- Fig. 4: eine teilgeschnittene Explosionsdarstellung einer erfindungsgemäßen Kolben-Zylinderanordnung.

In den Figuren sind gleiche Elemente mit gleichen Bezugszeichen versehen.

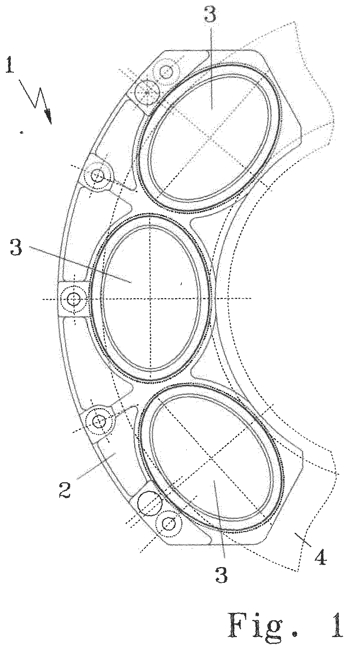

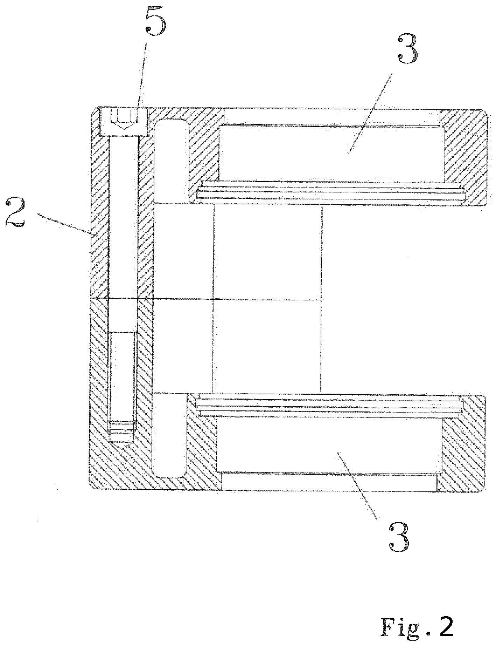

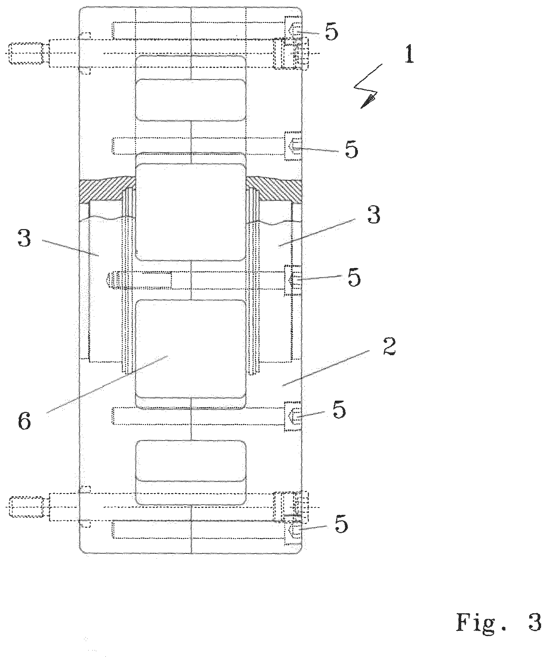

Die Figuren 1 bis 3 zeigen den generellen Aufbau einer Bremssatteleinheit 1, welche aus einem Träger 2 besteht, in welchem Aufnahmeräume 3 für Bremskolben ausgebildet sind. In bekannter Weise läuft eine Bremssatteleinheit 1 über einer nur in Fig. 1 angedeuteten Bremsscheibe 4, welche zwischen zwei gegenüberliegenden Bremskolbenaufnahmeräumen 3 hindurchläuft, wie die Figuren 2 und 3 zeigen. Im gezeigten Ausführungsbeispiel ist der Träger 2 zweiteilig ausgebildet und mittels Schrauben 5 sind die beiden Hälften verbunden.

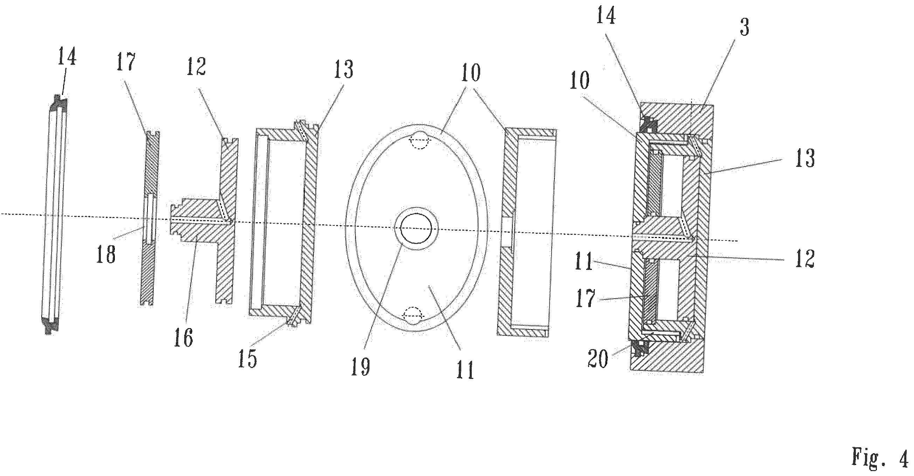

Fig. 4 zeigt den Aufbau einer erfindungsgemäßen Bremskolbeneinheit, die in einen Aufnahmeraum 3 im Träger angeordnet wird.

Das mit Bremskolben 10 bezeichnete Element drückt mit seiner äußeren Druckfläche 11 einen nicht gezeigten Bremsbelag gegen die Scheibe. Zu diesem Zweck wird der Bremskolben 10 mittels eines Kolbens 12, der in einem Zylinder 13 geführt ist und an der Verbindung 19 über seine Kolbenstange 16 mit dem Bremskolben 10 verbunden ist, bewegt. Im Zylinder 13 sind Druckmittelleitungen 15 ausgebildet, um das Druckmedium in den Bereich im Inneren des Zylinders 13 unter den Kolben 12 zu bringen. Somit wird der Kolben 12 vorgeschoben und drückt auf diese Weise den Bremskolben 10 ebenfalls vor. Die Kolbenstange 16 durchragt eine Zylinderkopfplatte 17, die zu diesem Zweck eine Öffnung 18 aufweist. Die Zylinderkopfplatte 17 ist den Zylinder 13 verschließend an diesem angeordnet. Wird der Kolben 12 aufgrund der Wirkung des Druckmediums im Zylinder vorbewegt, wird auch der Bremskolben 10 über die Kolbenstange 16, die in der Verbindung 18 des Bremskolbens 10 befestigt ist, vorgeschoben. Es entsteht ein weiterer Raum zwischen der Zylinderkopfplatte 17 und dem Inneren des Bremskolbens 10. Über eine Druckmediumleitung 20 wird weiteres Druckmedium in diesen sich ergebenden Spalt geführt und erzeugt an dieser Stelle einen zusätzlichen Druck, so dass der Bremskolben 10 eine zusätzliche Kraft ausüben kann. Die wirkenden Kolbenflächen addieren sich, dadurch wird für die gleiche Bremskraft ein geringerer Druck benötigt.

Im gezeigten Ausführungsbespiel sind drei elliptische Aufnahmeräume 3 für Bremskolbeneinheiten im Träger ausgebildet. Die elliptische Kontur ermöglicht eine große Kolbenfläche und damit eine große Kraftübertragung bei gleichzeitiger Verdrehsicherung. Die einzelnen Elemente der Kolbeneinheit können unrund gedreht werden, also elliptisch, so dass die Fertigung der einzelnen Bremskolbeneinheiten und der Aufnahmeräume im Sattel denkbar einfach und günstig ist.

Die beschriebenen Ausführungsbeispiele dienen nur der Erläuterung und sind nicht beschränkend.

### Bezugszeichen

- 1: Bremssatteleinheit
- 2: Träger
- 3: Aufnahme
- 4: Bremsscheibe
- 5: Schraube
- 6: Öffnungen
- 10: Bremskolben
- 11: Druckfläche
- 12: Kolben
- 13: Zylinder
- 14: Dichtung
- 15: Druckmediumleitung
- 16: Kolbenstange
- 17: Zylinderkopfplatte
- 18: Öffnung
- 19: Verbindung
- 20: Druckmediumleitung

## Patentansprüche

1. Bremssattel-Einheit (1) für Scheibenbremsen, mit einem einen Sattel bildenden Träger (2), einer pneumatisch betriebenen Kolben-/Zylinderanordnung und einem Bremsbelag,
**dadurch gekennzeichnet,**
**dass** ein Kolben (11) und ein Zylinder (13) einen nicht kreisrunden Querschnitt aufweisen und als Tandem-Kolben-Baugruppe ausgebildet sind.

2. Bremssattel-Einheit (1) nach Anspruch 1, **dadurch gekennzeichnet, dass** der Kolben (11) und der dazugehörige Zylinder (13) einen elliptischen Querschnitt aufweisen.

3. Bremssattel-Einheit (1) nach einem der vorhergehenden Ansprüche, **dadurch gekennzeichnet, dass** wenigstens zwei Kolben-/Zylinderanordnungen nebeneinanderliegend angeordnet sind.

4. Bremssattel-Einheit (1) nach einem der vorhergehenden Ansprüche, **dadurch gekennzeichnet, dass** diese zur schwimmenden Anordnung an einer Radbaugruppe ausgebildet ist.

5. Bremssattel-Einheit (1) nach einem der vorhergehenden Ansprüche, **dadurch gekennzeichnet, dass** der Träger (2) eine Aufnahmekammer für die Kolben-/Zylinderanordnung aufweist.

6. Bremssattel-Einheit (1) nach einem der vorhergehenden Ansprüche, **dadurch gekennzeichnet, dass** der Kolben (11) zum Vortrieb des Bremsbelages als topfförmiger Kolben (11) ausgebildet ist.

7. Bremssattel-Einheit (1) nach einem der vorhergehenden Ansprüche, **dadurch gekennzeichnet, dass** die Kolben-/Zylinderanordnung zwei ineinander geführte topfförmige Kolbeneinheiten umfasst, wobei die Innere einen Zylinderraum für einen Kolben (11) bildet und von einer Kolbenstange (16) durchragt wird und an ihrer äußeren Oberfläche einen weiteren Kolben (12) ausbildet, so dass die äußere topfförmige Kolbeneinheit in ihrem Inneren einen Zylinderraum für diesen weiteren Kolben (12) bildet.
